# EUROPEAN PATENT SPECIFICATION

(11) **EP 0 596 874 B1**
(45) Date of publication and mention of the grant of the patent: **28.01.1998**
(21) Application number: 90913015.5
(22) Date of filing: 09.08.1990
(51) Int. Cl.: A23G 3/00, A23G 9/00, A23G 9/02, A23G 9/24

(54) **CONFECTION AND METHOD FOR IMPROVING ADHERENCE OF FAT-BASED COATINGS TO FROZEN FAT-BASED CONFECTIONS**
Konfekt und Verfahren zur Verbesserung der Haftung von fettenthaltenden auf gefrorenen fettenthaltenden Konfekten
CONFISERIE ET PROCEDE D'AMELIORATION DE L'ADHERENCE DE NAPPAGES A BASE DE MATIERE GRASSE SUR DES CONFISERIES GLACEES A BASE DE MATIERE GRASSE

(30) Priority: 10.08.1989 US 392104
(43) Date of publication of application: 18.05.1994
(73) Proprietor: MARS INCORPORATED, McLean, Virginia 22101-3883 (US); YOUCHEFF, Gary G., Maytown, PA 17550 (US); WODKE, Stephen M., Lancaster, PA 17601 (US); PERKINS, Douglas W., Mount Joy, PA 17552 (US)
(72) Inventor: YOUCHEFF, Gary G., Maytown, PA 17550 (US); WODKE, Stephen M., Lancaster, PA 17601 (US); PERKINS, Douglas W., Mount Joy, PA 17552 (US)
(74) Representative: Mercer, Christopher Paul
(86) International application number: US9004480
(87) International publication number: WO9101649

(56) References cited:
- BE-A- 766 025
- GB-A- 187 919
- US-A- 1 901 394
- US-A- 2 360 559
- US-A- 2 801 922
- US-A- 4 643 894
- US-A- 4 738 865
- PATENT ABSTRACTS OF JAPAN vol. 11, no. 222 (C-435)18 July 1987 & JP-A-62 036 139 ( K. MICHIHIKO ET AL. ) 17 February 1987
- Corn Syrups and Sugars, issued 1958 (Washington, DC), Research Foundation, Inc. , see page 15.

## Description

This invention relates to the production of frozen or low temperature confections or food products such as frozen fat-based desserts which are covered with edible coatings. The primary object of the invention is to provide an improved coating for confections or food products of this type, or especially for ice cream bars or other bodies or articles made of ice cream or like compounds requiring low temperature storage.

In general, the coatings used for frozen fat-based desserts such as ice cream bars have been composed of a fat-containing substance. The coating material is melted and the frozen desserts are dipped into or otherwise coated with a liquified coating such as by spraying or enrobing with the liquified coating. The fat of the coating congeals on contact with the frozen desserts so that coatings are formed over the frozen desserts.

Coatings composed of fat-containing substances are often fragile and brittle, particularly when cold. When the confection is eaten, the coating will crack or flake off over a relatively large area often creating not only a mess but preventing the person eating the confection from enjoying the entire dessert. Additionally, after the coating has fallen off, the core leaks out on softening. It is to these problems that the present invention is addressed.

Various coatings for low temperature or frozen confections have been used in the past. For example, U.S. Patent No. 2,133,586 discloses the use of dextrose in a dry or crystalline state and, in part at least, anhydrous dextrose to improve the adherence of an ice cream coating. This is one of the earlier patents to address the problem of improving ice cream coating adhesion. U.S. Patent No. 2,191,352 discloses an edible coating for frozen confections (e.g., chocolate coating over an ice cream core) which is intended to be flexible and tender to the touch or bite, colored and flavored to taste, and capable of bonding to the core which it surrounds. The coating, which employs gelatin, reduces cracking and flaking off when bitten into. U.S. Patent Nos. 4,560,563 and 4,396,633 disclose the modification of the fat component of ice cream coatings as a means of improving "the tendency to break, flake, or rub off during production or consumption".

All these references relate to various attempts to address the problem of improving ice cream coating adhesion. These references use dry or crystalline and anhydrous dextrose, a modification of the fat component of ice cream coatings, or gelatin to improve the coating. None of these attempts have resulted in satisfactorily improving the adhesion of fat-containing coatings to frozen fat-based confections without undesirably affecting the quality, taste, texture and/or appearance of the final product.

It is therefore a primary object of this invention to improve the adhesion of fat-containing coatings to frozen fat-based confections.

It is another object of the invention to improve the adhesion of coatings to frozen fat-based confections without changing a consumer's perception of the quality, taste, texture and/or appearance of the coating or final product.

US-A-4738865 describes an adhesive for adhering flavouring agents to foodstuffs. The adhesive comprises a mixture of a reducing sugar, preferably lactose, and a maltodextrin. The adhesive is particularly useful for coating peanuts with a dry honey coating providing honey coated and salted nuts. The adhesive provides a tacky coating to which flavouring agent particles can adhere and which will maintain its integrity during subsequent processing.

US-A-4643894 describes a pharmaceutical, confectionary or food tablet coated on all exterior surfaces with maltodextrin. The maltodextrin masks the characteristic taste of the tablet ingredients and does not have a slimy texture. The coating composition preferably also comprises a plasticizer and a secondary film former to impart gloss and strength to the maltodextrin film coating.

BE-A-766025 describes coated frozen foodstuffs, such as coated ice cream bars, characterised in that the coating comprises a thixotropic aqueous gel based on a water-soluble polysaccharide. Preferably, the coating is based on alginate, or on a natural gum such as xanthan. The thixotropic gel coating can contain flavouring or colouring agents.

However, when the coating itself is altered so that the coating is not susceptible to massive cracking, the overall product undergoes unacceptable flavour and textural changes. It has now been discovered that, instead of changing the composition of the coating, improved results can be achieved with an interface layer between the coating and the confection.

The present invention provides a method of enhancing the adherence of a fat-based coating to a frozen fat-based confection without substantially affecting the taste and texture of said frozen fat-based confection, comprising applying an effective amount of an aqueous solution of an edible polysaccharide selected from hydrolysed starch and maltodextrin to the surface of said frozen fat-based confection as an interface layer between said frozen fat-based confection and said coating.

The present invention also provides a frozen fat-based confection comprising a frozen fat-based dessert core, a fat-based coating outer layer, and an effective amount of an aqueous solution of an edible polysaccharide selected from hydrolysed starch and maltodextrin as an interface layer between said frozen fat-based dessert core and said fat-based coating to enhance the adherence of said fat-based coating to said frozen fat-based dessert core without substantially affecting the taste and texture of said frozen fat-based confection.

The interface layer is applied by any standard method in the food industry including dipping, spraying (atomized and non-atomized), enrobing and dry or dusting application. The coating of the finished product is less susceptible to multiple cracking. Additionally, the resultant adhesion between the confection and the interface layer, and between the interface layer and the coating greatly reduces the potential for the drop-off of the coating during the eating process.

This invention relates to the production of frozen or low temperature confections or food products such as frozen fat-based desserts which are covered with edible coatings. The invention also relates to coated confections of the kind having a core or center of a frozen fat-based dessert such as ice cream, or the like. The inventors have discovered that a quantitative improvement in the adhesion of fat-based coatings to fat-based confections can be demonstrated by employing a particular composition as an interface layer between the fat-based coating and the fat-based confection.

The use of this interface layer between the coating and the confection does not affect the quality, taste, texture and/or appearance of the overall product.

The interface layer comprises a polysaccharide and a carrier, with or without flavors and colors. The carrier is water. The characteristics of the polysaccharide are that it can form, in an aqueous solution, a thin film which is undetectable when eating; it is bland or tasteless; it is white or colorless; and its solubility is high and viscosity low so it can be applied easily to the product.

Various polysaccharide interface layers have been found to enhance the adherence of coatings to frozen fat-based confections. Among the polysaccharides employed were hydrolyzed starches which were evaluated by varying the dextrose equivalent ("DE"). Hydrolyzed starches having a DE as high as 65 were found to enhance the adherence of the coatings. More particularly, hydrolyzed starches having a DE not exceeding 45 were found to further enhance the adherence of the coatings. Hydrolyzed starches having a DE not exceeding 25 were found to give the most improvement. Because some hydrolyzed starches are acceptable from the standpoint of improving adhesion, but also contribute sweetness to the final product, a preferred hydrolyzed starch is maltodextrin, a nonsweet nutritive saccharide polymer that consists of D-glucose units linked primarily by α-1-4 bonds and that has a DE of less than 20. Maltodextrin with a DE as low as 5 was found to improve the adherence of the coatings. A particularly preferred hydrolyzed starch is maltodextrin with a DE of 10.

The interface layer can be applied to the frozen fat-based confection core by conventional methods known in the food industry. Examples of such methods include dipping, spraying (atomized spraying and non-atomized spraying), enrobing and dusting. These same methods are then used to apply the fat-based coating over the interface layer. It has been found that a preferred method of applying the interface layer to the frozen fat-based dessert, from both a retention and a processing standpoint, is by atomized spraying.

In general, it has been found that the adherence of any fat-based coating, including pastels, can be improved with an interface layer in accordance with the teachings of this invention. A particularly preferred coating is chocolate. Fat-based coatings for use in accordance with the teachings of this invention typically have a thickness of 0.25 to 10 millimeters, and particularly 0.5 to 4 millimeters.

The solids concentration of the interface layer is effective over a wide range. The dry concentration was tested as high as approximately 0.2 mg polysaccharide/mm² on the surface of the frozen fat-based confection and as low as approximately about 0.006 mg/mm². Particularly good results are achieved when the concentration of the interface layer is about 0.07 mg/mm². Likewise, when in solution, a concentration as high as 41% solids was found to be effective. A concentration of about 33% solids was found to be particularly effective. A concentration as low as 15% solids was also found to be effective.

Additionally, while the thickness of the interface layer can vary greatly depending upon the particular application, it has generally been found that the preferred thickness is 0.1 millimeters.

### EXAMPLE

A frozen fat-based confection was prepared having an ice cream core or center, an interface layer and a chocolate coating. The interface layer comprised maltodextrin having a DE of 10 prepared as a solution of 33.3% solids in water, which solution was pasteurized.

The ice cream center was approximately 69 millimeters wide, by 70 millimeters long, by 21 1/2 millimeters thick.

The temperature of the ice cream at the time the maltodextrin solution was applied was -23°C (-10°F), and the temperature of the maltodextrin solution was approximately 1°C. The maltodextrin solution was applied by atomized spraying onto the ice cream center. The spraying continued until the surface area of the ice cream was covered. The total interface layer weight was about 2 1/2 grams, and the thickness of the layer was about 0.1 millimeters.

This product was then dipped into the chocolate coating at about 38°C (100°F), and the coating was solidified by passing the product through a cooling tunnel at approximately -29°C (-20°F). The resultant coating weighed about 30 grams, and was approximately 2 millimeters thick. The entire product was stored under normal conditions at approximately -29°C (-20°F).

Little or no change was detected in the quality, taste, texture and/or appearance of this final product compared to a product with no interface layer.

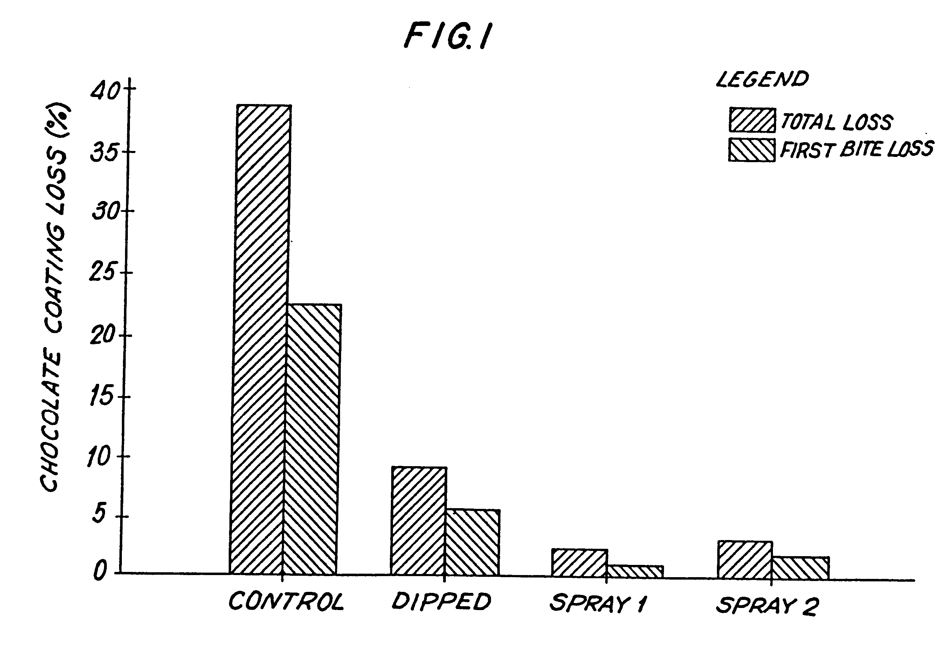

Certain aspects of the invention are further described in Figure 1. Figure 1 is a bar graph depicting a comparison between the average dark chocolate coating loss from samples with no interface layer (labeled control) and samples with a pasteurized interface layer applied to ice cream centers by dipping and spraying. The sprayed samples were sprayed using two different nozzle configurations (represented as Spray 1 and Spray 2). The different nozzle configurations effect the particle size of the spray, with Spray 1 having the smaller particle size.

There were 82 control products, 67 dipped products, 40 Spray 1 products and 30 Spray 2 products.

All test and control samples were hand dipped into dark chocolate coating.

All dipped and sprayed samples had an interface layer of about 33% solids 10 DE maltodextrin, weighing about 3.5 to 4.0 grams on the dipped samples and about 1.5 to 2.5 grams on the sprayed samples. The interface layer was approximately .2 millimeters thick for the dipped samples and approximately .1 millimeter thick for the sprayed samples. The thickness of the coating was between 1.6 and 2.0 millimeters.

The percent coating loss was determined using a mechanical device whereby controlled pressure was applied to the sample to simulate the bite plane and force which would be applied on biting. The resultant cracking pattern was analyzed and the coating loss measured.

In the figure, "first bite loss" relates to initial coating loss from cracking and falling off when the first bite is taken from the sample. "Total loss" relates to the overall coating loss that occurs during the entire time the sample is being eaten. As can be seen in the figure, coating loss in the dipped and sprayed samples were significantly improved over the control. The first bite loss in the control was approximately 23% and the total loss was approximately 38%. In the dipped product, the first bite loss was only approximately 7% and the total loss was only approximately 9%. In Spray 1, the first bite loss was only approximately 1% and total loss was only approximately 3%. In Spray 2, first bite loss was only approximately 2% and total loss was only approximately 4%.

The use of the maltodextrin interface layer resulted in a dramatic alteration of the cracking pattern of the fat coating compared to the cracking pattern when no interface layer was employed. An absence of extensive radial and progressive cracking in the test samples was detected which it is believed greatly reduces the potential for coating loss upon biting.

The results show that both sprayed and dipped test samples significantly reduce the potential for coating loss on biting over the control which had no interface layer.

Although an illustrative embodiment of the invention has been described herein, it is to be understood that the invention is not limited to the foregoing, and that various modifications may be effected therein by one skilled in the art without departing from the scope of the invention as defined in the appended claims.

## Claims

1. A method of enhancing the adherence of a fat-based coating to a frozen fat-based confection without substantially affecting the taste and texture of said frozen fat-based confection, comprising applying an effective amount of an aqueous solution of an edible polysaccharide selected from hydrolysed starch and maltodextrin to the surface of said frozen fat-based confection as an interface layer between said frozen fat-based confection and said coating.

2. A method according to claim 1, wherein the composition is applied by atomised spraying.

3. A method according to claim 1 or claim 2, wherein the interface layer has a total solids concentration of approximately 0.07mg/mm².

4. A frozen fat-based confection comprising a frozen fat-based dessert core, a fat-based coating outer layer, and an effective amount of an aqueous solution of an edible polysaccharide selected from hydrolysed starch and maltodextrin as an interface layer between said frozen fat-based dessert core and said fat-based coating to enhance the adherence of said fat-based coating to said frozen fat-based dessert core without substantially affecting the taste and texture of said frozen fat-based confection.

5. A frozen fat-based confection according to claim 4, wherein said fat-based core is ice cream and is approximately 69 mm wide, 60 mm long and 21.5 mm thick, the interface layer is approximately 0.1 mm thick and the coating is chocolate and is approximately 2 mm thick.

6. A method or a frozen fat-based confection according to any of claims 1 to 5, wherein the edible polysaccharide is a hydrolysed starch having a dextrose equivalent not exceeding 65.

7. A method or a frozen fat-based confection according to any of claims 1 to 5, wherein the edible polysaccharide is a hydrolysed starch having a dextrose equivalent not exceeding 45.

8. A method or a frozen fat-based confection according to any of claims 1 to 5, wherein the edible polysaccharide is a hydrolysed starch having a dextrose equivalent not exceeding 20.

9. A method or a frozen fat-based confection according to any of claims 1 to 5, wherein the polysaccharide is a hydrolysed starch having a dextrose equivalent in the range of from 5 to 20.

10. A method or a frozen fat-based confection according to any of claims 1 to 5, wherein the edible polysaccharide is maltodextrin.

11. A method or a frozen fat-based confection according to claim 10, wherein the maltodextrin has a dextrose equivalent of 10.

12. A method or a frozen fat-based confection according to any preceding claim, wherein the aqueous solution comprises from 15 to 41% of polysaccharide solids by weight.

13. A method or a frozen fat-based confection according to any preceding claim, wherein the concentration of edible polysaccharide in the aqueous solution does not exceed 41% of polysaccharide solids by weight.

14. A method or a frozen fat-based confection according to any preceding claim, wherein the concentration of edible polysaccharide in the aqueous solution does not exceed 33% of polysaccharide solids by weight.

15. A method or a frozen fat-based confection according to any preceding claim, wherein the aqueous solution is pasteurised.

## Patentansprüche

1. Ein Verfahren zur Erhöhung der Haftung eines fettenthaltenden Überzugs an einem gefrorenen fettenthaltenden Konfekt, ohne den Geschmack und die Textur besagten gefrorenen fettenthaltenden Konfekts wesentlich zu beeinflussen, welches umfaßt, daß eine wirksame Menge einer wässrigen Lösung eines eßbaren Polysaccharids, das ausgewählt ist aus hydrolysierter Stärke und Maltodextrin, auf die Oberfläche besagten gefrorenen fettenthaltenden Konfekts als eine Zwischenschicht zwischen besagtem gefrorenen fettenthaltenden Konfekt und besagtem Überzug aufgebracht wird.

2. Ein Verfahren nach Anspruch 1, wobei die Zusammensetzung durch Aufsprühen mit Zerstäubung aufgebracht wird.

3. Ein Verfahren nach Anspruch 1 oder Anspruch 2, wobei die Zwischenschicht eine Gesamtfeststoffkonzentration von ungefähr 0,07 mg/mm² aufweist.

4. Ein gefrorenes fettenthaltendes Konfekt, das einen gefrorenen fettenthaltenden Dessertkern, eine fettenthaltende Überzugaußenschicht und eine wirksame Menge einer wässrigen Lösung eines eßbaren Polysaccharids, das ausgewählt ist aus hydrolysierter Stärke und Maltodextrin, als eine Zwischenschicht zwischen besagtem gefrorenen fettenthaltenden Dessertkern und besagtem fettenthaltenden Überzug umfaßt, um die Haftung besagten fettenthaltenden Überzugs an besagtem gefrorenen fettenthaltenden Dessertkern zu erhöhen, ohne den Geschmack und die Textur besagten gefrorenen fettenthaltenden Konfekts wesentlich zu beeinflussen.

5. Ein gefrorenes fettenthaltendes Konfekt nach Anspruch 4, wobei besagter fettenthaltender Kern Eiskrem ist und ungefähr 69 mm breit, 60 mm lang und 21,5 mm dick ist, die Zwischenschicht ungefähr 0,1 mm dick ist und der Überzug Schokolade ist und ungefähr 2 mm dick ist.

6. Ein Verfahren oder ein gefrorenes fettenhaltendes Konfekt nach einem der Ansprüche 1 bis 5, wobei das eßbare Polysaccharid eine hydrolysierte Stärke mit einem Dextroseäquivalent ist, das 65 nicht übersteigt.

7. Ein Verfahren oder ein gefrorenes fettenthaltendes Konfekt nach einem der Ansprüche 1 bis 5, wobei das eßbare Polysaccharid eine hydrolysierte Stärke mit einem Dextroseäquivalent ist, das 45 nicht übersteigt.

8. Ein Verfahren oder ein gefrorenes fettenthaltendes Konfekt nach einem der Ansprüche 1 bis 5, wobei das eßbare Polysaccharid eine hydrolysierte Stärke mit einem Dextroseäquivalent ist, das 20 nicht übersteigt.

9. Ein Verfahren oder ein gefrorenes fettenthaltendes Konfekt nach einem der Ansprüche 1 bis 5, wobei das Polysaccharid eine hydrolysierte Stärke mit einem Dextroseäquivalent im Bereich von 5 bis 20 ist.

10. Ein Verfahren oder ein gefrorenes fettenthaltendes Konfekt nach einem der Ansprüche 1 bis 5, wobei das eßbare Polysaccharid Maltodextrin ist.

11. Ein Verfahren oder ein gefrorenes fettenthaltendes Konfekt nach Anspruch 10, wobei das Maltodextrin ein Dextroseäquivalent von 10 besitzt.

12. Ein Verfahren oder ein gefrorenes fettenthaltendes Konfekt nach einem vorangehenden Anspruch, wobei die wässrige Lösung von 15 bis 41 Gew.-% Polysaccharid-Trockenmasse umfaßt.

13. Ein Verfahren oder ein gefrorenes fettenthaltendes Konfekt nach einem vorangehenden Anspruch, wobei die Konzentration an eßbarem Polysaccharid in der wässrigen Lösung 41 Gew.-% Polysaccharid-Trockenmasse nicht übersteigt.

14. Ein Verfahren oder ein gefrorenes fettenthaltendes Konfekt nach einem vorangehenden Anspruch, wobei die Konzentration an eßbarem Polysaccharid in der wässrigen Lösung 33 Gew.-% Polysaccharid-Trockenmasse nicht übersteigt.

15. Ein Verfahren oder ein gefrorenes fettenthaltendes Konfekt nach einem vorangehenden Anspruch, wobei die wässrige Lösung pasteurisiert ist.

## Revendications

1. Procédé d'amélioration de l'adhérence de nappages à base de matière grasse sur des confiseries glacées à base de matière grasse sans affecter de façon considérable le goût et la texture de ladite confiserie glacée à base de matière grasse, comprenant l'application d'une quantité efficace d'une solution aqueuse d'un polysaccharide comestible, choisi parmi l'amidon hydrolysé et la maltodextrine, sur la surface de la confiserie glacée à base de matière grasse sous forme de couche d'interface entre ladite confiserie glacée à base de matière grasse et ledit nappage.

2. Procédé selon la revendication 1, caractérisé en ce que la composition est appliquée par pulvérisation en pluie.

3. Procédé selon la revendication 1 ou la revendication 2, caractérisé en ce que la couche d'interface à une concentration totale en matière solide d'approximativement 0,07mg/mm².

4. Confiserie glacée à base de matière grasse comprenant un coeur de dessert glacé à base de matière grasse, une couche externe de nappage à base de matière grasse, et une quantité efficace d'une solution aqueuse d'un polysaccharide comestible choisi parmi l'amidon hydrolysé et la maltodextrine sous forme de couche d'interface entre ledit coeur du dessert glacé à base de matière grasse et ledit nappage à base de matière grasse pour améliorer l'adhérence dudit nappage à base de matière grasse audit coeur du dessert glacé à base de matière grasse sans affecter de façon considérable le goût et la texture de ladite confiserie glacée à base de matière grasse.

5. Confiserie glacée à base de matière grasse selon la revendication 4, caractérisé en ce que ledit coeur à base de matière grasse est une crème glacée et présente approximativement une largeur de 69 mm, une longueur de 60 mm et une épaisseur de 21,5 mm, la couche d'interface présente approximativement une épaisseur de 0,1 mm et le nappage est du chocolat et présente approximativement une épaisseur de 2 mm.

6. Procédé ou confiserie glacée à base de matière grasse selon l'une quelconque des revendications 1 à 5, caractérisé en ce que le polysaccharide comestible est un amidon hydrolysé ayant un équivalent en dextrose n'excédant pas 65.

7. Procédé ou confiserie glacée à base de matière grasse selon l'une quelconque des revendications 1 à 5, caractérisé en ce que le polysaccharide comestible est un amidon hydrolysé ayant un équivalent en dextrose n'excédant pas 45.

8. Procédé ou confiserie glacée à base de matière grasse selon l'une quelconque des revendications 1 à 5, caractérisé en ce que le polysaccharide comestible est un amidon hydrolysé ayant un équivalent en dextrose n'excédant pas 20.

9. Procédé ou confiserie glacée à base de matière grasse selon l'une quelconque des revendications 1 à 5, caractérisé en ce que le polysaccharide comestible est un amidon hydrolysé ayant un équivalent en dextrose allant de 5 à 20.

10. Procédé ou confiserie glacée à base de matière grasse selon l'une quelconque des revendications 1 à 5, caractérisé en ce que le polysaccharide comestible est une maltodextrine.

11. Procédé ou confiserie glacée à base de matière grasse selon la revendication 10, caractérisé en ce que la maltodextrine a un équivalent en dextrose de 10.

12. Procédé ou confiserie glacée à base de matière grasse selon l'une quelconque des revendications précédentes, caractérisé en ce que la solution aqueuse comprend de 15 à 41% en poids de matière solide à base de polysaccharide.

13. Procédé ou confiserie glacée à base de matière grasse selon l'une quelconque des revendications précédentes, caractérisé en ce que la concentration du polysaccharide comestible dans la solution aqueuse n'excède pas 41% en poids de matière solide à base de polysaccharide.

14. Procédé ou confiserie glacée à base de matière grasse selon l'une quelconque des revendications précédentes, caractérisé en ce que la concentration du polysaccharide comestible dans la solution aqueuse n'excède pas 33% en poids de matière solide à base de polysaccharide.

15. Procédé ou confiserie glacée à base de matière grasse selon l'une quelconque des revendications précédentes, caractérisé en ce que la solution aqueuse est pasteurisée.
